(19) Europäisches Patentamt
European Patent Office
Office européen des brevets

(11) **EP 2 140 111 B1**

(12) **EUROPÄISCHE PATENTSCHRIFT**

(45) Veröffentlichungstag und Bekanntmachung des Hinweises auf die Patenterteilung:
**07.05.2014 Patentblatt 2014/19**

(21) Anmeldenummer: **08735875.0**

(22) Anmeldetag: **07.04.2008**

(51) Int Cl.:
*F01D 5/14* *(2006.01)*      *F01D 9/02* *(2006.01)*

(86) Internationale Anmeldenummer:
**PCT/EP2008/054141**

(87) Internationale Veröffentlichungsnummer:
**WO 2008/128877 (30.10.2008 Gazette 2008/44)**

(54) **STRÖMUNGSMASCHINE**

TURBOMACHINE

TURBOMACHINE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.04.2007 CH 6742007**

(43) Veröffentlichungstag der Anmeldung:
**06.01.2010 Patentblatt 2010/01**

(73) Patentinhaber: **Alstom Technology Ltd
5400 Baden (CH)**

(72) Erfinder:
• **KONTER, Maxim
CH-5313 Klingnau (CH)**
• **VORONTSOV, Sergey
Moskau, 129164 (RU)**
• **KHANIN, Alexander
Moskau, 121601 (RU)**
• **KARELIN, Alexey
Moskau, 109518 (RU)**
• **BONE, Alexander
Moskau, 127572 (RU)**

(56) Entgegenhaltungen:
**EP-A- 1 731 716      EP-A1- 0 916 812
CH-A- 492 868      DE-A1- 4 228 879
JP-A- 57 018 405      JP-A- 2001 221 006
JP-A- 2005 220 797      US-A- 4 131 387
US-A- 6 036 438**

## Beschreibung

### Technisches Gebiet

Die vorliegende Erfindung betrifft eine Strömungsmaschine, insbesondere eine Turbomaschine, mit den Merkmalen des Oberbegriffs des Anspruchs 1.

### Stand der Technik

Eine Strömungsmaschine, insbesondere eine Turbomaschine, wie z.B. eine Gasturbine, eine Dampfturbine oder ein Verdichter, weist üblicherweise einen Stator und einen Rotor auf, der im Stator um eine Rotationsachse drehbar gelagert ist. Am Stator ist wenigstens eine Leitschaufelreihe ausgebildet, die mehrere bezüglich der Rotationsachse in Umfangsrichtung nebeneinander angeordnete Leitschaufeln aufweist. Der Rotor weist zumindest eine Laufschaufelreihe auf, die mehrere bezüglich der Rotationsachse zueinander benachbarte Laufschaufeln aufweist. Dabei bilden jeweils eine Leitschaufelreihe und eine bezüglich einer Arbeitsgasströmung stromab unmittelbar nachfolgende Laufschaufelreihe eine Stufe oder Druckstufe der Strömungsmaschine. Im Betrieb der Strömungsmaschine sind insbesondere die Laufschaufeln extrem hohen Belastungen ausgesetzt, was sich auf die Standzeiten der Laufschaufeln auswirkt. Um die Wirtschaftlichkeit der Strömungsmaschine zu verbessern, ist es erwünscht, die Standzeiten der Schaufeln, insbesondere der Laufschaufeln, zu erhöhen.

Strömungsmaschinen mit den Merkmalen des Oberbegriffs des Anspruchs 1 sind aus der US 4,11,387, der CH 492 866, der US 6,036,438 und der DE 42 28 879 bekannt und bieten vergleichsweise lange Standzeiten der Schaufeln. Des Weiteren sind aus der JP 57-018405, der JP 2001-221006, der JP 2005-220797 und der EP 0 916 f812 Strömungsmaschinen bekannt, bei denen zumindest der Axialabstand zwischen den Abströmkanten der Laufschaufeln entlang einer radial gemessenen Höhe des zwischen den Leit- und Laufschaufeln verlaufenden Gaspfades variiert.

Trotz vielfältiger Versuche wurde bislang noch keine optimale Gestaltung der Leit- und Laufschaufeln gefunden.

### Darstellung der Erfindung

Hier setzt die Erfindung an. Die Erfindung, wie sie in den Ansprüchen gekennzeichnet ist, beschäftigt sich mit dem Problem, für eine Strömungsmaschine der eingangs genannten Art eine verbesserte Ausführungsform anzugeben, die sich insbesondere durch eine erhöhte Standzeit der Schaufeln, insbesondere der Laufschaufeln, auszeichnet.

Erfindungsgemäß wird dieses Problem durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, zumindest bei einer Stufe die Leitschaufeln und die Laufschaufeln so aufeinander abzustimmen, dass bei einer Referenzrelativlage ein Abstand zwischen einer Abströmkante der jeweiligen Leitschaufel und einer Anströmkante der jeweiligen Laufschaufel in Abhängigkeit von der radialen Position in axialer Richtung und in Umfangsrichtung jeweils entsprechend einem Polynom zweiter Ordnung variiert. Die Erfindung nutzt hierbei die Erkenntnis, dass jede Leitschaufel stromab ihrer Abströmkante eine intensive Nachlaufströmung erzeugt, die von der jeweiligen Laufschaufel durchquert werden muss. Sobald diese Nachlaufströmung auf die Anströmkante der jeweiligen Laufschaufel trifft, ergibt sich ein Lastwechsel an der Laufschaufel. Bei einer herkömmlichen Ausgestaltung von Laufschaufel und Leitschaufeln kann der Fall auftreten, dass die jeweilige Laufschaufel an ihrer Anströmkante überall nahezu simultan von der Nachlaufströmung der vorausgehenden Leitschaufel getroffen wird, wodurch die Belastung der Laufschaufeln vergleichsweise hoch ist. Durch den erfindungsgemäßen Vorschlag wird offenbar erreicht, dass die Beaufschlagung der Anströmkante durch die Nachlaufströmung zeitlich gestreckt und entlang der radialen Länge der Laufschaufel zu optimalen Zeitpunkten erfolgt. Die dynamische Belastung der Laufschaufeln wird dabei ebenso reduziert wie deren absolute Belastung. Hierdurch kann die Standzeit der Laufschaufeln gesteigert werden.

Entsprechend einer vorteilhaften Ausführungsform können die Leitschaufeln und die Laufschaufeln der jeweiligen Stufe so aufeinander abgestimmt sein, dass der Axialabstand entlang der Gaspfadhöhe von radial innen nach radial außen zunächst bis zu einem Minimum abnimmt und danach wieder zunimmt. Hierdurch wird erreicht, dass der Axialabstand im Bereich der Laufschaufelspitze und im Bereich der Leitschaufelspitze jeweils vergleichsweise groß ist, wodurch die Nachlaufströmung abgeschwächt wird, was die Belastung der Laufschaufel und auch der Leitschaufel in diesem Bereich reduziert.

Weitere wichtige Merkmale und Vorteile der erfindungsgemäßen Strömungsmaschine ergeben sich aus den Unteransprüchen, aus den

Zeichnungen und aus der zugehörigen Figurenbeschreibung anhand der Zeichnungen.

### Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,

Fig. 1     einen Axialschnitt durch eine Strömungsmaschine im Bereich einer Stufe,

**Fig. 2** eine Schnittansicht entsprechend Schnittlinien II in Fig. 1,

**Fig. 3** eine Schnittansicht entsprechend Schnittlinien III in Fig. 1,

**Fig. 4** eine Schnittansicht entsprechend Schnittlinien IV in Fig. 1,

**Fig. 5** ein Diagramm zur Veranschaulichung des Verlaufs eines Axialabstands entlang einer Gaspfadhöhe,

**Fig. 6** ein Diagramm zur Veranschaulichung des Verlaufs eines Umfangsabstands entlang einer Gaspfadhöhe.

## Wege zur Ausführung der Erfindung

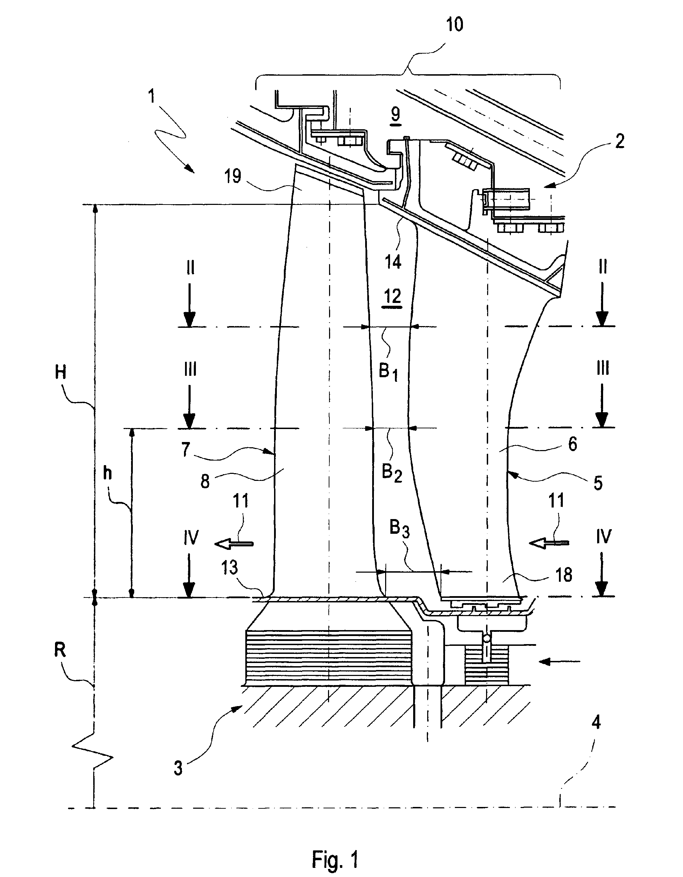

Entsprechend Fig. 1 umfasst eine nur teilweise dargestellte Strömungsmaschine 1 einen ebenfalls nur zum Teil dargestellten Stator 2 sowie einen nur teilweise dargestellten Rotor 3, der im Stator 2 um eine Rotationsachse 4 drehbar angeordnet ist. Bei der Strömungsmaschine 1 handelt es sich vorzugsweise um eine Turbomaschine, wie z.B. eine Gasturbine oder eine Dampfturbine oder einen Verdichter. Die vorliegende Erfindung findet bevorzugt bei einer Gasturbine Anwendung.

Die Strömungsmaschine 1 weist zumindest eine Leitschaufelreihe 5 auf, die durch mehrere bezüglich der Rotationsachse 4 zueinander benachbart angeordnete Leitschaufeln 6 gebildet ist, von denen in Fig. 1 jedoch nur eine erkennbar ist. Fig. 1 zeigt einen Ausschnitt der Strömungsmaschine 1, in dem sich nur eine derartige Leitschaufelreihe 5 befindet. Es ist klar, dass die Strömungsmaschine 1 grundsätzlich mehrere derartige Leitschaufelreihen 5 aufweisen kann. Ferner umfasst die Strömungsmaschine 1 zumindest eine Laufschaufelreihe 7, die mehrere in Umfangsrichtung zueinander benachbarte Laufschaufeln 8 aufweist. Auch hier ist nur eine Laufschaufel 8 erkennbar. Die Strömungsmaschine 1 weist in dem in Fig. 1 gezeigten Ausschnitt nur eine solche Laufschaufelreihe 7 auf. Es ist klar, dass die Strömungsmaschine 1 auch mehrere derartige Laufschaufelreihen 7 aufweisen kann. Die Leitschaufeln 6 der jeweiligen Leitschaufelreihe 5 sind am Stator 2, insbesondere an einem Leitschaufelträger 9 angebracht. Im Unterschied dazu sind die Laufschaufeln 8 der jeweiligen Laufschaufelreihe 7 am Rotor 3 angebracht.

Je eine Leitschaufelreihe 5 und eine axial dazu benachbarte Laufschaufelreihe 7 bilden eine Stufe 10 der Turbomaschine 1. Die Stufe 10, die auch als Druckstufe bezeichnet werden kann, ist in Fig. 1 durch eine geschweifte Klammer gekennzeichnet. Innerhalb der jeweiligen Stufe 10 ist die Laufschaufelreihe 7 bezüglich einer Arbeitsgasströmung 11, die durch Strömungsrichtungspfeile angedeutet ist, stromab der zugehörigen Leitschaufelreihe 5 angeordnet. Axial zwischen den Schaufelreihen 5, 7 der gleichen Stufe 10 läuft ein Gaspfad 12, der im wesentlichen durch einen ringförmigen axialen Spalt zwischen den Schaufelreihen 5, 7 der jeweiligen Stufe 10 gebildet ist. Der Gaspfad 12 ist radial innen durch einen Boden 13 der jeweiligen Laufschaufel 8 und radial außen durch einen Boden 14 der jeweiligen Leitschaufel 6 begrenzt. Der Gaspfad 12 weist in radialer Richtung eine Höhe H auf, die bei einem konvergierenden oder bei einem expandierenden Querschnittsverlauf jeweils durch die mittlere Höhe innerhalb des Gaspfads 12 innerhalb der Stufe 10 gebildet ist. Der Boden 13 der jeweiligen Laufschaufel 8 weist von der Rotationsachse 4 ein in radialer Richtung einen Radialabstand R auf.

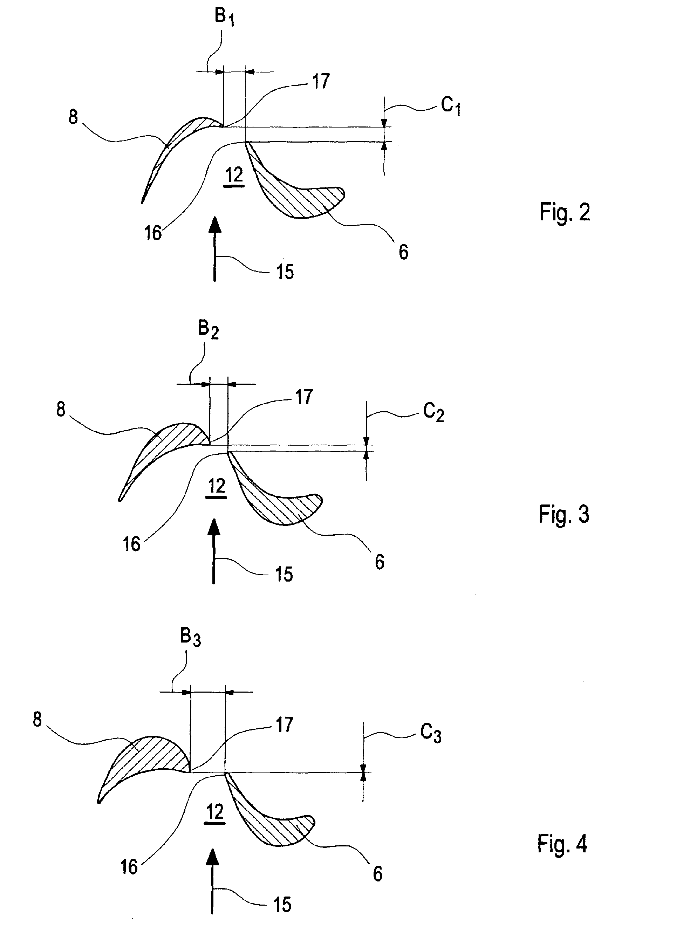

Es ist klar, dass die Strömungsmaschine 1 grundsätzlich mehrere derartige Stufen 10 aufweisen kann. Zumindest eine dieser Stufen 10 ist erfindungsgemäß ausgestaltet, was im folgenden mit Bezug auf die Fig. 2 bis 4 näher erläutert wird.

Die Fig. 2 bis 4 zeigen Schnitte durch die Stufe 10 bei verschiedenen Schnittebenen, die in unterschiedlichen Höhenpositionen h durch die gezeigte Leitschaufel 6 und die gezeigte Laufschaufel 8 gelegt sind. Fig. 2 zeigt dabei den Schnitt durch die Schnittebene II, während Fig. 3 den Schnitt in der Schnittebene III zeigt und Fig. 4 den Schnitt durch die Schnittebene IV. In den Fig. 2 bis 4 ist jeweils durch einen Pfeil 15 die Drehrichtung der Laufschaufel 8 angedeutet. Im Bereich des Gaspfads 12, also des axialen Ringspalts, besitzt jede Leitschaufel 6 eine Abströmkante 16, und jede Laufschaufel 8 weist dort eine Anströmkante 17 auf. In den Fig. 1 bis 4 ist mit B jeweils ein in axialer Richtung gemessener Axialabstand bezeichnet, und entsprechend den hier gezeigten drei Schnittebenen indiziert. Die Fig. 2 bis 4 zeigen außerdem einen in Umfangsrichtung gemessenen Umfangsabstand C, der ebenfalls analog zu den drei Schnittebenen indiziert ist. Wie den Fig. 1 bis 4 zu entnehmen ist, variiert der Axialabstand B entlang der Höhe H des Gaspfads 12, also in radialer Richtung. Ein solcher in Abhängigkeit der Höhenposition h innerhalb des Gaspfads 12 variierender Axialabstand B lässt sich durch eine entsprechende Abstimmung der Leitschaufeln 6 und der Laufschaufeln 8 erreichen. Zusätzlich sind die Leitschaufeln 6 und die Laufschaufeln 8 so ausgestaltet bzw. aufeinander abgestimmt, dass der Umfangsabstand C entlang der Höhe H des Gaspfads 12 variiert, also von der Höhenposition h abhängt. Dabei verändern sich der Axialabstand B und der Umfangsabstand C jeweils entsprechend einem Polynom Zweiter Ordnung. Realisiert werden die genannten Abhängigkeiten durch eine entsprechende Formgebung der Laufschaufeln 8 und/oder der Leitschaufeln 6. Bevorzugt ist eine Ausführungsform, bei welcher herkömmliche Laufschaufeln 8 mit neuartigen Leitschaufeln 6 kombiniert werden, um die gewünschte Abhängigkeit der Abstände B und C zu erzielen. Die Leitschaufeln 6 werden für diese Formgebung bevorzugt, da sie im Betrieb der Strömungsmaschine 1 kleineren Belastungen ausgesetzt sind.

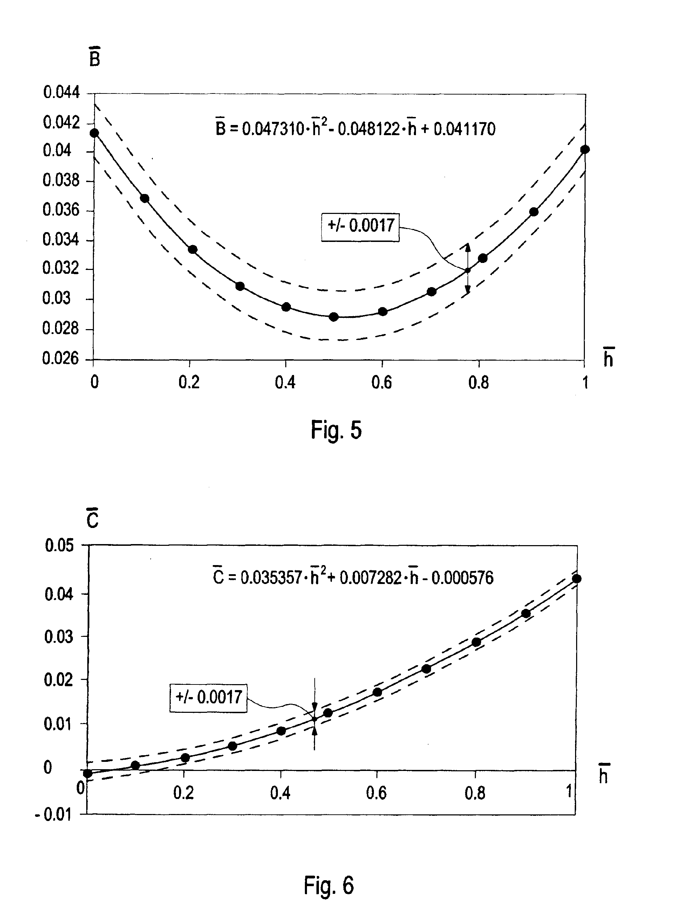

Die in Fig. 5 bzw. in den Fig. 1 bis 4 wiedergegebene Beziehung oder Abhängigkeit des Axialabstands B von der Höhenposition h liegt bei einer vorbestimmten Referenzrelativlage zwischen den beiden betrachteten Schaufeln 6, 8 vor. Da die Laufschaufeln 8 im Betrieb der Strömungsmaschine 1 entsprechend der Rotationsrichtung 15 rotieren, stellt sich diese Referenzposition bei jeder Schaufelpaarung innerhalb dieser Stufe 10 immer wieder ein.

Wie den Fig. 1 bis 4 und insbesondere auch Fig. 5 entnehmbar ist, sind die Leitschaufeln 6 und die Laufschaufeln 8 vorzugsweise so aufeinander abgestimmt, dass der Axialabstand B entlang der Höhe H des Gaspfads 12 von einem radial innen liegenden Maximum mit zunehmender Höhenposition h, also von radial innen nach radial außen zunächst abnimmt und abschließend wieder zunimmt, wo er in einem radial außen liegenden Bereich wieder ein Maximum aufweisen kann. Die Vergrößerung des Axialabstands B im Bereich einer in Fig. 1 gekennzeichneten Leitschaufelspitze 18 sowie im Bereich einer in Fig. 1 gekennzeichneten Laufschaufelspitze 19 reduziert die strömungsdynamische Belastung der empfindlichen Schaufelspitzen 18, 19, aufgrund der damit einhergehenden Strömungspfadvergrößerung in axialer Richtung. Wie insbesondere Fig. 5 zu entnehmen ist, besitzt der in Fig. 5 wiedergegebene Verlauf des Axialabstands B bei etwa 50% der Gesamthöhe H des Gaspfads 12 sein Minimum. Bei Fig. 5 ist auf der Ordinate der normierte Axialabstand B aufgetragen. Der normierte Axialabstand B entspricht dem tatsächlichen Axialabstand B bezogen auf den Radialabstand R, den der Laufschaufelboden 13 von der Rotationsachse 4 aufweist. Das bedeutet B = B/R.

Auf der Abszisse ist im Diagramm gemäß Fig. 5 die normierte relative Höhe h, also die normierte Höhenposition h wiedergeben. Die normierte Höhenposition $\overline{h}$ ergibt sich aus der tatsächlichen Höhenposition h bezogen auf die Gesamthöhe H. Demnach gilt: $\overline{h}$ = h/H.

Die Leitschaufeln 6 und die Laufschaufeln 8 sind so aufeinander abgestimmt, dass die Abhängigkeit des Axialabstands B von der Höhenposition h einem Polynom zweiter Ordnung entspricht. Das bedeutet, dass sich der Axialabstand B entlang der Gaspfadhöhe H entsprechend einem Polynom zweiter Ordnung verändert. Ein derartiges Polynom zweiter Ordnung bildet sich dabei wie folgt:

$$\overline{B} = b_2 \cdot \overline{h}^2 + b_1 \cdot \overline{h} + b_0 \pm b_k$$

Die Koeffizienten b dieses Polynoms sind vorzugsweise so gewählt, dass der Koeffizient $b_0$ größer als 0 ist und insbesondere den Wert +0,04117 aufweist. Der Koeffizient $b_1$ ist vorzugsweise negativ, also kleiner 0. Insbesondere kann der Koeffizient $b_1$ den Wert -0,048122 aufweisen. Der Koeffizient $b_2$ ist zweckmäßig größer als 0 gewählt und kann insbesondere den Wert +0,04731 aufweisen. Der Koeffizient $b_k$ bildet einen Korrekturwert, der gewissermaßen eine Toleranzbreite definiert, innerhalb der sich der Verlauf des Axialabstands B entlang der Gesamthöhe H bewegen kann, um den von der Erfindung erwünschten Effekt in besonders vorteilhafter Weise realisieren zu können. Die mit Hilfe des Korrektureffizienten $b_k$ realisierte Bandbreite ist in Fig. 5 durch unterbrochene Linien beiderseits der Verlaufslinie angedeutet, wobei sich die mit durchgezogener Linie dargestellte Verlaufslinie bei fehlenden Korrekturkoeffizienten $b_k$ ergibt.

Entsprechend den Fig. 2 bis 4 und insbesondere in Hinblick auf Fig. 6 ist erkennbar, dass die Leitschaufeln 6 und die Laufschaufeln 8 zweckmäßig so ausgestaltet und aufeinander abgestimmt sind, dass der Umfangsabstand C mit zunehmender Höhenposition h von radial innen bis radial außen stetig zunimmt. Das bedeutet, dass die in Fig. 6 dargestellte Abhängigkeit des Umfangsabstands C von der radialen Position, also von der Höhenposition h radial innen sein Minimum hat und radial außen sein Maximum besitzt. Das Diagramm in Fig. 6 stellt auf der Ordinate den normierten Umfangsabstand C dar. Dieser ergibt sich aus dem tatsächlichen Umfangsabstand C bezogen auf den Radialabstand R. Also gilt: C = C/R. Die Abszisse ist auch in Fig. 6 durch die normierte Höhenposition $\overline{h}$ wiedergeben.

Für die bereits weiter oben genannte Referenzrelativlage zwischen den betrachteten Schaufeln 6, 8 der Stufe 10 ergibt sich der hier gezeigte Zusammenhang bzw. die hier gezeigte Abhängigkeit des Umfangsabstands C von der Höhenposition h. Besagte Referenzrelativlage kann beispielsweise so definiert werden, dass der Umfangsabstand C radial innen, also auf Höhe des Laufschaufelbodens 13 im wesentlichen den Wert Null hat. Dies ist bei der Schnittebene III gemäß Fig. 4 im wesentlichen der Fall.

Entsprechend Fig. 6 sowie gemäß den Fig. 2 bis Verändert sich der Umfangsabstand C entlang der Gaspfadhöhe H entsprechend einem Polynom zweiter Ordnung. Beispielhaft kann ein derartiges Polynom wie folgt gebildet sein:

$$\overline{C} = c_2 \cdot \overline{h}^2 + c_1 \cdot \overline{h} + c_0 \pm c_k$$

Die Koeffizienten c dieses Polynoms lassen sich exemplarisch wie folgt bestimmen: Der Koeffizient $c_0$ ist vorzugsweise negativ und kann beispielsweise einen Wert von -0,000576 aufweisen. Der Koeffizient $c_1$ ist vorzugsweise positiv und kann beispielsweise den Wert +0,007282 aufweisen. Der Koeffizient $c_2$ ist bevorzugt positiv und kann insbesondere den Wert 0,035357 aufweisen. Der Koeffizient $c_k$ bildet einen Korrekturkoeffizienten, der quasi eine Bandbreite oder Toleranzbreite zulässiger Abweichungen des Verlaufs des Umfangsabstands C entlang der Höhe H definiert. Der Korrekturkoeffizient $c_k$ besitzt beispielsweise den Wert 0,0017. In Fig. 6 ist mit durchgezogener Linie analog zu Fig. 5 der Verlauf des normierten Umfangsabstands $\overline{C}$ in Abhängigkeit der normierten Höhenposition $\overline{h}$ ohne Korrekturkoeffizient $c_k$ wiedergeben. Zwei unterbrochene Linien beiderseits des mit durchgezogener Linie gezeichneten Verlaufs definieren den Toleranzbereich, der sich bei der Berücksichtigung des Korrekturkoeffizienten $c_k$ ergibt.

**Bezugszeichenliste**

| 1 | Strömungsmaschine |
|---|---|
| 2 | Stator |
| 3 | Rotor |
| 4 | Rotationsachse |
| 5 | Leitschaufelreihe |
| 6 | Leitschaufel |
| 7 | Laufschaufelreihe |
| 8 | Laufschaufel |
| 9 | Leitschaufelträger |
| 10 | Stufe |
| 11 | Arbeitsgasströmung |
| 12 | Gaspfad |
| 13 | Laufschaufelboden |
| 14 | Leitschaufelboden |
| 15 | Rotationsrichtung |
| 16 | Abströmkante |
| 17 | Anströmkante |
| 18 | Leitschaufelspitze |
| 19 | Laufschaufelspitze |
| h | Höhenposition |
| $\overline{h}$ | normierte Höhenposition |
| H | Höhe von 12 |
| R | Radialabstand des Laufschaufelbodens 13 |
| B | Axialabstand |
| $\overline{B}$ | normierter Axialabstand |
| b | Koeffizient |
| C | Umfangsabstand |
| $\overline{C}$ | normierter Umfangsabstand |
| c | Koeffizient |

**Patentansprüche**

1. Strömungsmaschine, insbesondere Turbomaschine,

   - mit wenigstens einer, mehrere Leitschaufeln (6) aufweisenden Leitschaufelreihe (5),
   - mit wenigstens einer, mehrere Laufschaufeln (8) aufweisenden Laufschaufelreihe (7),
   - wobei jeweils eine Leitschaufelreihe (5) und eine bezüglich einer Arbeitsgasströmung (11) stromab unmittelbar nachfolgende Laufschaufelreihe (7) eine Stufe (10) der Strömungsmaschine (1) bilden,

   - wobei zumindest bei einer Stufe (10) die Leitschaufeln (6) und die Laufschaufeln (8) so aufeinander abgestimmt sind, dass in einer Referenzrelativlage zwischen der jeweiligen Leitschaufel (6) und der jeweiligen Laufschaufel (8) ein bezüglich einer Rotationsachse (4) eines Rotors (3) der Strömungsmaschine (1) in axialer Richtung gemessener Axialabstand (B) und ein bezüglich der Rotationsachse (4) des Rotors (3) der Strömungsmaschine (1) in Umfangsrichtung gemessener Umfangsabstand (C) zwischen einer Abströmkante (16) der jeweiligen Leitschaufel (6) und einer Anströmkante (17) der jeweiligen Laufschaufel (8) entlang einer radial gemessenen Höhe (H) eines axial zwischen den Schaufelreihen (5,7) dieser Stufe (10) verlaufenden Gaspfads (12) variieren,
   **dadurch gekennzeichnet,**
   - **dass** sich der Axialabstand (B) und der Umfangsabstand (C) entlang der Gaspfadhöhe (H) jeweils entsprechend einem Polynom zweiter Ordnung verändern.

2. Strömungsmaschine nach Anspruch 1,
   **dadurch gekennzeichnet,**
   **dass** der Axialabstand (B) entlang der Gaspfadhöhe (H) von radial innen nach radial außen zunächst bis zu einem Minimum abnimmt und danach wieder zunimmt.

3. Strömungsmaschine nach Anspruch 2,
   **dadurch gekennzeichnet,**
   **dass** sich das Minimum im Bereich von etwa 50% der Gaspfadhöhe (H) befindet.

4. Strömungsmaschine nach einem der Ansprüche 1 bis 3,
   **dadurch gekennzeichnet,**
   **dass** das dem Axialabstand (B) zugeordnete Polynom wie folgt gebildet ist:

$$\overline{B} = b_2 \cdot \overline{h}^2 + b_1 \cdot \overline{h} + b_0 \pm b_k,$$

   wobei B = B/R und h = h/H und R = radialer Abstand eines Laufschaufelbodens (13) von der Rotationsachse (4).

5. Strömungsmaschine nach Anspruch 4,
   **dadurch gekennzeichnet,**
   **dass** der Koeffizient $b_0$ positiv ist und insbesondere den Wert +0,04117 aufweist.

6. Strömungsmaschine nach Anspruch 4 oder 5,
   **dadurch gekennzeichnet,**
   **dass** der Koeffizient $b_1$ negativ ist und insbesondere den Wert -0,048122 aufweist.

**7.** Strömungsmaschine nach einem der Ansprüche 4 bis 6,
**dadurch gekennzeichnet,**
**dass** der Koeffizient $b_2$ positiv ist und insbesondere den Wert +0,04731 aufweist.

**8.** Strömungsmaschine nach einem der Ansprüche 4 bis 7,
**dadurch gekennzeichnet,**
**dass** der Koeffizient $b_k$ den Wert 0,0017 aufweist.

**9.** Strömungsmaschine nach einem der Ansprüche 1 bis 8,
**dadurch gekennzeichnet,**
**dass** der Umfangsabstand (C) entlang der Gaspfadhöhe (H) von radial innen nach radial außen nur zunimmt, wenn die Leitschaufeln (6) und die Laufschaufeln (8) relativ zueinander so stehen, dass der Umfangsabstand (C) radial innen etwa den Wert Null hat.

**10.** Strömungsmaschine nach Anspruch 9,
**dadurch gekennzeichnet,**
**dass** das dem Umfangsabstand (C) zugeordnete Polynom wie folgt gebildet ist:

$$\overline{C} = c_2 \cdot \overline{h}^2 + c_1 \cdot \overline{h} + c_0 \pm c_k,$$

wobei $\overline{C}$ = C/R und $\overline{h}$ = h/H und R = radialer Abstand eines Laufschaufelbodens (13) von der Rotationsachse (4).

**11.** Strömungsmaschine nach Anspruch 10,
**dadurch gekennzeichnet,**
**dass** der Koeffizient $c_0$ negativ ist und insbesondere den Wert -0,000576 aufweist.

**12.** Strömungsmaschine nach Anspruch 10 oder 11,
**dadurch gekennzeichnet,**
**dass** der Koeffizient $c_1$ positiv ist und insbesondere den Wert +0,007282 aufweist.

**13.** Strömungsmaschine nach einem der Ansprüche 10 bis 12,
**dadurch gekennzeichnet,**
**dass** der Koeffizient $c_2$ positiv ist und insbesondere den Wert +0,035357 aufweist.

**14.** Strömungsmaschine nach einem der Ansprüche 10 bis 13,
**dadurch gekennzeichnet,**
**dass** der Koeffizient $c_k$ den Wert 0,0017 aufweist.

**Claims**

**1.** A fluid flow engine, in particular a turbo engine,

- having at least one guide vane row (5) with a plurality of guide vanes (6),
- having at least one rotor blade row (7) having a plurality of rotor blades (8),
- one guide vane row (5) and one rotor blade row (7) following the former directly downstream with respect to a working gas flow (11) together forming a stage (10) of the fluid flow engine (1),
- at least at one stage (10) the guide vanes (6) and the rotor blades (8) being coordinated so that in a reference relative position between the respective guide vane (6) and the respective rotor blade (8) an axial distance (B) that is measured in the axial direction with regard to an axis of rotation (4) of a rotor (3) of the fluid flow engine (1) and a circumferential distance (C) that is measured in the circumferential direction with regard to the axis of rotation (4) of the rotor (3) of the fluid flow engine (1) between an outgoing flow edge (16) of the respective guide vane (6) and an oncoming flow edge (17) of the respective rotor blade (8) vary along a radially measured height (H) of a gas path (12) running axially between the vane blade rows (5, 7) of this stage 10,

**characterized in that,**
- the axial distance (B) and the circumferential distance (C) vary along the gas path height (H) in each case according to a second-order polynomial.

**2.** The fluid flow engine according to Claim 1,
**characterized in that,**
the axial distance (B) decreases at first to a minimum from the inside radially to the outside radially along the gas path height (H) and then increases again.

**3.** The fluid flow engine according to Claim 2,
**characterized in that,**
the minimum is in the range of approximately 50% of the gas path height (H).

**4.** The fluid flow engine according to any one of Claims 1 through 3,
**characterized in that,**
the polynomial associated with the axial distance (B) is formed as follows:

$$\overline{B} = b_2 \cdot \overline{h}^2 + b_1 \cdot \overline{h} + b_0 \pm b_k$$

where $\overline{B}$ = B/R and $\overline{h}$ = h/H and R = radial distance of a rotor blade bottom (13) from the axis of rotation (4).

**5.** The fluid flow engine according to Claim 4, **characterized in that,** the coefficient $b_0$ is positive and has a value of +0.04117 in particular.

**6.** The fluid flow engine according to Claim 4 or 5, **characterized in that** the coefficient $b_1$ is negative and has a value of -0.048122 in particular.

**7.** The fluid flow engine according to any one of Claims 4 through 6, **characterized in that** the coefficient $b_2$ is positive and has a value of +0.04731 in particular.

**8.** The fluid flow engine according to any one of Claims 4 through 7, **characterized in that** the coefficient $b_k$ has a value of 0.0017.

**9.** The fluid flow engine according to any one of Claims 1 through 8, **characterized in that,** the circumferential distance (C) increases from the inside radially to the outside radially along the gas path height (H) only when the guide vanes (6) and the rotor blades (8) are positioned relative to one another so that the circumferential distance (C) has a value of approximately zero on the inside radially.

**10.** The fluid flow engine according to Claim 9, **characterized in that,** the polynomial associated with the circumferential distance (C) is formed as follows:

$$\overline{C} = c_2 \cdot \overline{h}^2 + c_1 \cdot \overline{h} + c_0 \pm c_k$$

where $\overline{C} = C/R$ and $\overline{h} = h/H$ and R = radial distance of a rotor blade bottom (13) from the axis of rotation (4).

**11.** The fluid flow engine according to Claim 10, **characterized in that,** the coefficient $c_0$ is negative and has a value of -0.000576 in particular.

**12.** The fluid flow engine according to Claim 10 or 11, **characterized in that,** the coefficient $c_1$ is positive and has a value of +0.007282 in particular.

**13.** The fluid flow engine according to any one of Claims 10 through 12,

**characterized in that,** the coefficient $c_2$ is positive and has a value of +0.035357 in particular.

**14.** The fluid flow engine according to any one of Claims 10 through 13, **characterized in that,** the coefficient $c_k$ has a value of 0.0017.

**Revendications**

**1.** Machine fluidique, en particulier turbomachine,

- comprenant au moins une rangée d'aubes directrices (5) présentant plusieurs aubes directrices (6),
- comprenant au moins une rangée d'aubes mobiles (7) comprenant plusieurs aubes mobiles (8),
- à chaque fois une rangée d'aubes directrices (5) et une rangée d'aubes mobiles (7) suivant celle-ci immédiatement en aval par rapport à un écoulement de gaz de travail (11) formant un étage (10) de la machine fluidique (1),
- les aubes directrices (6) et les aubes mobiles (8) étant adaptées les unes aux autres au moins au niveau d'un étage (10) de telle sorte que dans une position relative de référence entre l'aube directrice respective (6) et l'aube mobile respective (8), une distance axiale (B) mesurée dans la direction axiale par rapport à un axe de rotation (4) d'un rotor (3) de la machine fluidique (1) et une distance périphérique (C) mesurée dans la direction périphérique par rapport à l'axe de rotation (4) du rotor (3) de la machine fluidique (1) entre un bord de fuite (16) de l'aube directrice respective (6) et un bord d'attaque (17) de l'aube mobile respective (8) varient le long d'une hauteur mesurée radialement (H) d'un chemin de gaz (12) s'étendant axialement entre les rangées d'aubes (5, 7) de cet étage (10), **caractérisée en ce que**
- la distance axiale (B) et la distance périphérique (C) varient le long de la hauteur du chemin de gaz (H) à chaque fois suivant un polynôme du deuxième ordre.

**2.** Machine fluidique selon la revendication 1, **caractérisée en ce que** la distance axiale (B) le long de la hauteur du chemin de gaz (H) diminue d'abord jusqu'à un minimum depuis une position radialement interne vers une position radialement externe pour ensuite augmenter à nouveau.

**3.** Machine fluidique selon la revendication 2, **caractérisée en ce que**

le minimum se trouve dans la région d'environ 50 % de la hauteur du chemin de gaz (H).

4. Machine fluidique selon l'une quelconque des revendications 1 à 3,
**caractérisée en ce que**
le polynôme associé à la distance axiale (B) s'énonce comme suit :

$$\overline{B} = b_2 \cdot \overline{h}^2 + b_1 \cdot \overline{h} + b_0 \pm b_k ,$$

avec $\overline{B} = B/R$ et $\overline{h} = h/H$ et R = distance radiale d'une base d'aube mobile (13) à l'axe de rotation (4).

5. Machine fluidique selon la revendication 4,
**caractérisée en ce que**
le coefficient $b_0$ est positif et présente notamment la valeur +0,04117.

6. Machine fluidique selon la revendication 4 ou 5,
**caractérisée en ce que**
le coefficient $b_1$ est négatif et présente notamment la valeur -0,048122.

7. Machine fluidique selon l'une quelconque des revendications 4 à 6,
**caractérisée en ce que**
le coefficient $b_2$ est positif et présente notamment la valeur +0,04731.

8. Machine fluidique selon l'une quelconque des revendications 4 à 7,
**caractérisée en ce que**
le coefficient $b_k$ présente la valeur 0,0017.

9. Machine fluidique selon l'une quelconque des revendications 1 à 8,
**caractérisée en ce que**
la distance périphérique (C) le long de la hauteur du chemin de gaz (H) augmente depuis une position radialement interne vers une position radialement externe uniquement lorsque les aubes directrices (6) et les aubes mobiles (8) sont disposées les unes par rapport aux autres de telle sorte que la distance périphérique (C) dans la position radialement interne présente approximativement la valeur zéro.

10. Machine fluidique selon la revendication 9,
**caractérisée en ce que**
le polynôme associé à la distance périphérique (C) s'énonce comme suit :

$$\overline{C} = c_2 \cdot \overline{h}^2 + c_1 \cdot \overline{h} + c_0 \pm c_k ,$$

avec $\overline{C} = C/R$ et $\overline{h} = h/H$ et R = distance radiale d'une base d'aube mobile (13) à l'axe de rotation (4).

11. Machine fluidique selon la revendication 10,
**caractérisée en ce que**
le coefficient $c_0$ est négatif et présente notamment la valeur -0,000576.

12. Machine fluidique selon la revendication 10 ou 11,
**caractérisée en ce que**
le coefficient $c_1$ est positif et présente notamment la valeur +0,007282.

13. Machine fluidique selon l'une quelconque des revendications 10 à 12,
**caractérisée en ce que**
le coefficient $c_2$ est positif et présente notamment la valeur +0,035357.

14. Machine fluidique selon l'une quelconque des revendications 10 à 13,
**caractérisée en ce que**
le coefficient $c_k$ présente la valeur 0,0017.

Fig. 1

Fig. 2

Fig. 3

Fig. 4

$$\bar{B} = 0.047310 \cdot \bar{h}^2 - 0.048122 \cdot \bar{h} + 0.041170$$

+/- 0.0017

Fig. 5

$$\bar{C} = 0.035357 \cdot \bar{h}^2 + 0.007282 \cdot \bar{h} - 0.000576$$

+/- 0.0017

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 411387 A
- CH 492866
- US 6036438 A
- DE 4228879
- JP 57018405 A
- JP 2001221006 A
- JP 2005220797 A
- EP 0916F812 A